# EUROPEAN PATENT APPLICATION

(11) **EP 2 784 740 A1**
(43) Date of publication of application: **01.10.2014**
(21) Application number: 12845619.1
(22) Date of filing: 09.10.2012
(51) Int. Cl.: G06Q 30/06, G06Q 50/10

(54) **AUTOMATED APPRAISAL SYSTEM FOR CARDS**

(30) Priority: 02.11.2011 JP 2011241199
(71) Applicant: Japan Novel Corporation, Tokyo 1140002 (JP); Gio-Cubic Inc., Tokyo 160-0022 (JP)
(72) Inventor: SAITO, Ken-ichi, Tokyo 160-0022 (JP); TANAKA, Yoshihiko, Tokyo 160-0022 (JP); SHIMOYAMA, Itaru, Tokyo 114-0002 (JP)
(74) Representative: Fredriksson, Teresia
(86) International application number: PCT/JP2012/076150
(87) International publication number: WO 2013/065456

(57) **Abstract**

To automatically identify, assess, and evaluate a trading card to shorten the classification process and compile a database so that cards are precisely assessed or authenticated or the prices of cards are determined based on the conditions thereof in the used-card market.

[Solving Means]

Card shops 3a to 3c serve as client departments of a trading card assessment system. They identify and assess cards, view card information, and display informative matters from a main office. The card identification process includes reading a card image, converting characteristics into numerical values, inquiring of a data center about the characteristic values, and displaying the inquiry result. The displayed inquiry result includes card information (card name, series name, or the like) and card trading rates (buying price, selling price) . The card assessment process includes comparing the identified card image with the scanned image (detecting stains, scratches, or color fade-out).

## Description

### [Technical Field]

The present invention relates to a system for automatically appraising cards and in particular trading cards.

### [Background Art]

### <What is a trading card?>

Trading cards are cards having different pictures, and there are various types of trading cards. Trading cards are sold or distributed for trade, collection, appreciation, or games. Trading cards are widespread in Japan as well as globally, and adults as well as children can enjoy them.

### <How trading cards are sold or distributed?>

Trading cards have a standard size which is close to that of a telephone card. Typically, several tens to several hundred or several thousand types of cards are created in particular fields (sports, animation, characters, idols, and the like). One or multiple cards of one series are packed and sold on a pack basis. Since the purposes of trading cards include collection, cards are randomly included in most of packs so that the contents are unknown.

### <About Rare Cards>

Of trading cards as described above, some types of cards are valued as cards for appreciation or games by lovers. For this reason, the numbers of those types of cards circulated in the market are limited intentionally or accidentally. Such limited numbers of cards have high rarity values. Accordingly, these rare cards (limited numbers of cards) are collected, traded, or bought/sold by lowers. Typically, rare cards, or cards which are popular for some reason such as due to the design or theme thereof are traded as having added values.

### <What is a trading card game?>

A "trading card game" is a card game which is played using dedicated cards which are sold as trading cards. Many of trading card games are one-on-one matches. In the English-speaking world, trading card games are generally called collectable card games. Trading card games are also called customizable card games.

### <Overview of Trading Card Game>

A trading card game is a game in which two or more players each bring a "deck, " which is a card bundle formed by combining their collected cards freely or according to some rule, and then play against each other using the decks. In principle, each player prepares one deck. If different players bring cards or decks having the same title, they do not play against each other while mixing such cards or decks. Different ability values or effects are given to respective cards and expressed as numbers, sentences, or the like. By combining such cards, a wide variety of decks are created. For example, players create decks on the basis of the following concepts:
·Create a deck centering on a particular character and enjoy the personality of the character.
·Aiming to win a game, pursue a method for creating a strong deck.
·Consider a deck having original tactics which no one conceives.

Note that events such as conventions are periodically held so that players keep their motivation toward games.

### <Environment Surrounding Trading Card Business>

According to a research of an incorporated association, the Japan Toy Association, the size of the trading card game (TCG) market in Japan in 2009 is 76.1 billion yen, and TCGs are particularly popular commodities among the toys except for TV games. There are many types of TCGs, and TCGs can be bought at bookstores or convenience stores. Card owners may possess redundant cards. In this case, they sell the redundant cards to others. Further, the secondhand card market where cards are bought or sold at stores is expanding. For example, TCGs are bought or sold at reuse/recycle shops, antiquarian bookshops, card specialty stores, auctions, or the like, and TCG series whose distribution amount is increasing have market prices and are being bought or sold.

### <Sale Forms>

Starter pack: a set of materials that inexperienced players need when starting a game.
Pre-constructed deck: sold along with a game rule book; a combination of decks which were strong in past conventions or events.
Booster pack: often does not contain cards which perform basic functions in games; sold for users wishing to construct a deck having a wider variety.
Limited sale/distribution: particular cards tied up with commodity sales promotion such as manufacturer events, admission privileges, supplements to books, or the like. Sale of used cards: separate cards, separate series, or originally constructed decks are sold by card specialty stores, recycle shops, or the like.

### <Secondary Distribution as Used Cards>

When collecting cards necessary to construct a deck, collecting rare cards, or collecting all cards (complete), buying the desired cards specifically are often economically reasonable compared to continuing to buy brand-new packs. For this reason, the used-card market has been formed.

### [Prior Art Documents]

### [Patent Documents]

[Patent Document 1] Japanese Unexamined Patent Application Publication No. 2003-044613

### [Summary of the Invention]

### [Problems to Be Solved by the Invention]

A problem with the secondary distribution is that great numbers of series, categories, attributes, types, and values are classified depending on human memory. Currently, trading cards are appraised manually according to the following steps:
·Identifying the card (identifying the type of the card)
·Assessing the card (assessing the grade of the card on the basis of scratches or stains)
·Evaluating the card (evaluating the card on the basis of the net price and grade of the identified card)

### <Problems with Assessment>

Many of customers wishing to sell cards bring multiple or large number of cards together to the store. Since the cards cannot be assessed efficiently using barcodes, item numbers, or the like, unlike books or the like, previously employed staff members who are familiar with cards classify the cards manually. Thus, assessment tends to depend on judgment of the staff members in charge of classification. Further, human errors such as oversight or assessment errors frequently occur, causing disadvantage to both customers and the store.

Another problem is that assessment takes a long time. Assessment of more than 300 cards takes the time of multiple staff members, that is, consumes human resources.

Advantages of identifying a card include:
·A scanned image of the card is acquired.
·The name of the card is acquired.
·A card which has yet to be officially announced is found.
·The market share and statistics of the card are acquired.

By compiling the acquired and found data into a database and using the database in conjunction with market price information, profit models other than used card sale can be developed.

In view of the foregoing, an object of the present invention is to, when making an appraisal of a card such as a trading card, which is currently being made manually, identify, assess, and evaluate the card automatically to shorten the classification process and compile a database so that cards are precisely assessed or authenticated or the prices of cards are determined based on the conditions thereof in the used-card market.

### [Means for Solving the Problems]

An automatic card appraisal system according to the present invention includes a main office serving as a management department of a card assessment system, a data center serving as a database department of the card assessment system, and multiple card shops serving as client departments of the card assessment system and configured to identify and assess a card, to view card information, and to display an informative matter from the main office. The main office, the data center, and the card shops are connected together through a network such as the Internet so as to be capable of communicating with one another. The main office and the card shops are each provided with a sheet-feed scanner for scanning a card.

### [Effects of the Invention]

According to the present invention, when making an appraisal of a card, the card is automatically identified, assessed, and evaluated, thereby shortening the classification process and compiling a database so that cards are precisely assessed or authenticated or the prices of cards are determined based on the conditions thereof in the used-card market.

### [Brief Description of the Drawings]

Fig. 1 is a diagram showing the configuration of an automatic card appraisal system according to the present invention.
Fig. 2 is a drawing showing numerical conversion of characteristics of a card image.
Fig. 3 is a diagram showing authentication of a card pattern.
Fig. 4 is a diagram showing a rental operation system of a card identification system.
Fig. 5 is a diagram schematically showing a trading card identification service and a web media construction/operation system using databases.

### [Embodiment of the Invention]

Hereafter, an embodiment of the present invention will be described with reference to the drawings.

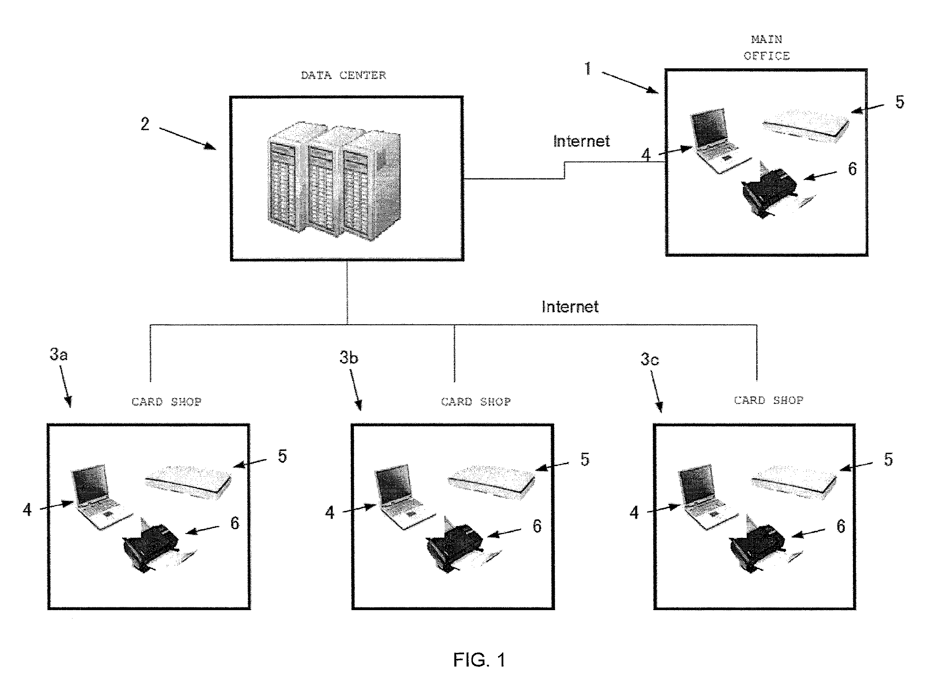

Fig. 1 is a diagram showing the configuration of an automatic card appraisal system according to the present invention. In Fig. 1, 1 represents a main office, 2 a data center, and 3a to 3c card shops. The main office 1 and the data center 2, and the data center 2 and the card shops 3a to 3c are connected together through a network such as the Internet so as to be capable of communicating with each other. While there are three card shops in an example shown in Fig. 1, the number of card shops may be more or less than three. Of course, there is no limit to the number of shops unless the processing capacity of the main office 1 or data center 2 is exceeded.

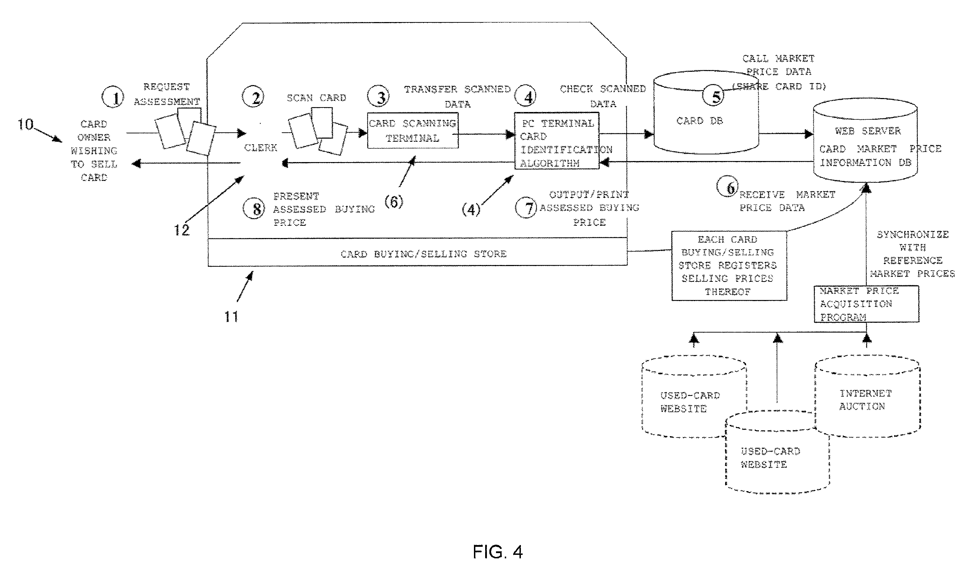

Further, in Fig. 1, 4 represents a computer, 5 a flatbed scanner, and 6 a sheet-feed scanner. The main office 1 and the card shops 3a to 3c are each provided with these apparatuses. Note that the flatbed scanners 5 need not necessarily be provided.

The main office 1 serves as the management department of a trading card assessment system. It performs the following card information registration, change, and deletion operations:
·Scan the card image
·Convert characteristics (series mark, card pattern) of the card image into numerical values
·Register card trading rates
·Register, change, or delete card information in the database of the data center

The main office 1 manages the trading card trading rates as follows:
·Manage separate cards
·Manage card groups

Further, the main office 1 distributes informative matters to the card shops.

The data center 2 serves as the database department of the trading card assessment system. With respect to trading cards, the data center 2 registers:
·Card information
·Characteristics of card images
·Card images

The data center 2 also manages the following trading rates:
·Buying price
·Selling price

The data center 2 also transfers informative matters from the main office.

The card shops 3a to 3c serve as client departments of the trading card assessment system. They identify and assess cards, view card information, and display informative matters from the main office.

Each card shop identifies a card as follows:
·Scan a card image and convert characteristics thereof into numerical values
·Inquire of the data center about characteristic values
·Display the inquiry result

The card shop displays the following inquiry results:
·Card information (card name, series name, or the like)
·Card trading rates (buying price, selling price)

The card shop assesses the card as follows:
- Compare the identified card image with the scanned image (detect stains, scratches, or color fade-out)

As used herein, "view card information" refers to searching for a card manually.

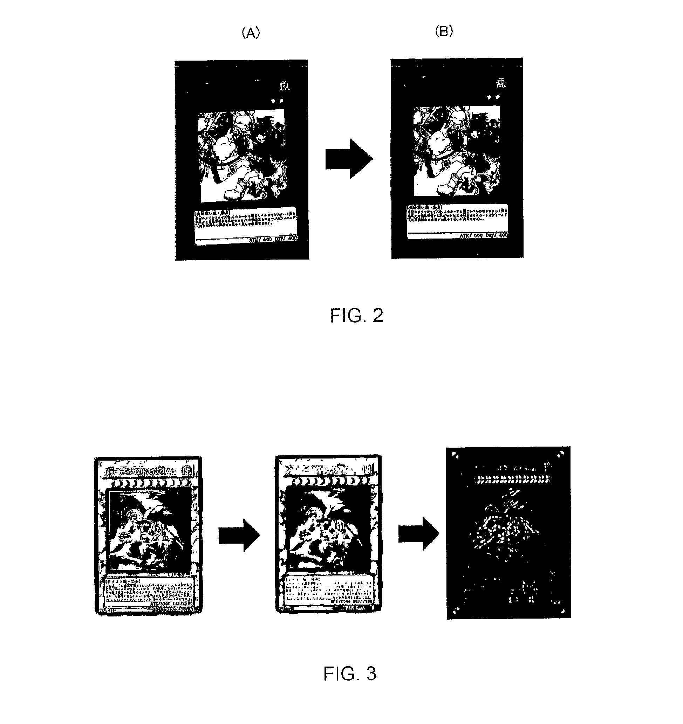

Fig. 2 is a drawing showing numerical conversion of characteristics of a card image. In a card image characteristics numerical conversion process, first, image preprocessing is performed. As shown in Fig. 2, the image preprocessing includes (A) rotational correction of a card image and (B) adjustment of the aspect ratio of the card image.

Then, a series mark is searched for as follows:
·If the card image includes a series mark, the mark is searched for.
·Whether the model pattern (shape) of a previously registered series mark is present on the trading card image is checked.
·If the model pattern is present, the number of that model is regarded as a series mark value.

Then, optical character recognition (OCR) is performed using the flatbed scanner 5 (or sheet-feed scanner 6) as follows:
·The name and serial number of the card are obtained by OCR.
·Processes corresponding to the background color and text color are performed to increase the detection rate. Specifically, the text color is inferred by analogy from such as the overall brightness of the text extraction range including the background and then extracted.

For example, the text color is inferred by analogy and extracted using the following conditions:
·Black text with respect to a bright background
·White text (fringed with black) with respect to a bright background
·White text with respect to a dark background
·Black text (fringed with white) with respect to a dark background

Then, as shown in Fig. 3, the card pattern is authenticated. This authentication process is performed by previously reducing the amount of information of each card and registering only distinctive information as master data. Thus, the card is authenticated faster.

Fig. 4 is a diagram showing a rental operation system of a card identification system. This system lends each user store a card scanning terminal and a PC (card identification program) in combination and collects a monthly usage fee and an initial introduction cost from the user store.

A clerk 12 of a card buying/selling store 11 receives an assessment request from a card owner wishing to sell a card 10 (step 1); the clerk 12 scans the card using a card scanning terminal (e.g., the sheet-feed scanner 6 shown in Fig. 1) (step 2); the clerk 12 transfers the scanned data to a PC terminal (e.g., the notebook PC 4 in Fig. 1) (step 3); the PC terminal executes a card identification algorithm to check the scanned data (step 4); the PC terminal call market price data (shares the card ID) using the card database (card DB) generated as described above and held by the data center 2 (step 5) ; the PC terminal receives market price data from the card market price database of a WEB server installed in the data center 2 (step 6); and the PC terminal automatically outputs (prints or the like) an assessed buying price (step 7). Note that each card buying/selling store registers selling prices of that store in the card market price information database of the WEB server, and these selling prices are used as card market price information. Further, by using a market price acquisition program, each card buying/selling store uses market price information at Internet auctions or data displayed at used card-related websites as market price information and synchronizes such market price information with reference market prices.

Typically, the rank of a trading card is determined based on such as whether the card includes the following:
·Scratches
·Stains
·Burns

The market price of a trading card is determined by:
·Market value
·Condition of the card
·Comparison with market prices at Internet auctions such as Yahoo™ auction
·Comparison with prices at card specialty sites
·Reference to reference prices
·Comparison between cards

Data management includes:
·Store-specific inventory management
·Commodity-specific inventory management

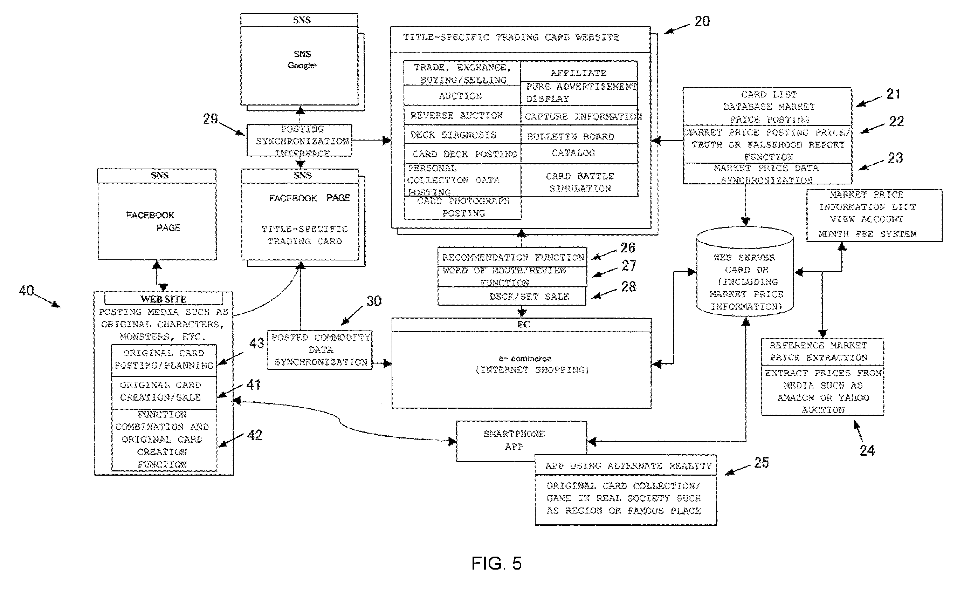

Fig. 5 is a diagram schematically showing a trading card identification service and a web media construction/operation system using databases.

In Fig. 5, 20 represents a title-specific trading card website including the following sites:
·"Trading card trading, exchange, buying/selling"
·"Auction"
·"Reverse auction"
·"Deck diagnosis"
·"Card deck posting"
·"Personal collection data posting"
·"Card photograph posting"
·"Affiliate"
·"Pure advertisement display"
·"Capture information"
·"Bulletin board"
·"Catalog"
·"Card battle simulation"

These sites will be described below as being sites requiring member registration.

·The "trading card trading, exchange, buying/selling" site is a site at which the members trade, exchange, and buy/sell trading cards. Further, at this site, the members can search a card list database for card information and post information indicating their exchange wish (information indicating that they seek or provide something) on the basis of the retrieved card information. The members can also post information indicating their buying/selling wish (information indicating that they will buy or sell something). The members can also reply to the posted information so that exchange or selling/buying is performed. The members can also provide different types of information, including the latest exchange or selling/buying wish information and ranking information, and evaluate any members with respect to exchange or selling/buying.
·The "auction" site is a site at which the members search the card database for card information and post auction information on the basis of the retrieved card information. The auction information refers to information such as the photograph, condition, minimum price, bidding deadline, delivery method, payment method, or the like of a card that a member wishes to sell. That member does business with a bidder who has presented the highest price until the deadline. The members can post auction information or make a bid for auction information. The members can also provide different types of information, including the latest information, information indicating that the completion of the auction is approaching, information indicating that the exhibition is complete, and ranking information, and evaluate any members with respect to auctions.
·The "reverse auction" site is a site at which the members can search the card database for card information and post reverse auction information on the basis of the retrieved card information. The reverse auction refers to a trading method in which a member seeking a certain card posts trading conditions or desired price; members possessing the card present possible prices; and the card seeking member does business with a bidder whose has presented the lowest price. The members can post reverse auction information or make a bid for reverse auction information. The members can also provide different types of information, including the latest information, information indicating that the completion of the reverse auction is approaching, information indicating that the exhibition is complete, and ranking information, and evaluate any members with respect to reverse auctions.
·The "deck diagnosis" site is a site which, when a member selects multiple cards and registers them as a deck, determines the strength of the deck at a match on the basis of the attributes or parameters of the selected cards or the combination of the cards.
·The "card deck posting" site is a site at which the members can select multiple cards and register them as decks conceived by them and thus announce the decks to the other members. The members can also post comments, such as the aims or tactics of the decks, along with the decks. The other members can make evaluations, notes, or the like on the decks, and a deck ranking or the like based on the evaluations or the like is also displayed.
·The "personal collection data posting" site is a site in which the members can register their own cards. The members can also make the registered information open or closed to the other members.
·The "card photograph posting" site is a site at which the members can register and make public their own cards along with images thereof. The other members can post comments on the registered cards. The members can share a card acquisition technique or the like by posting cards which have been just released, rare cards, limited cards, or the like. The members can also authenticate the posted cards on the basis of the accompanying images.
·The "affiliate" site is a site which solicits advertising requests from companies wishing to advertise card-related goods or companies wishing to place advertisements targeted for members interested in certain cards and then place advertisements thereon. When an advertisement placed by a certain company is clicked, the window is switched to another site which is previously registered by the company, and a fee is charged at this point in time. Companies can previously set fees which they pay when their advertisements are clicked, and advertisements at which higher fees are set are preferentially displayed at this site.
·The "pure advertisement display" site is a site which solicits advertising requests from companies wishing to advertise card-related goods or companies wishing to place advertisements targeted for members interested in certain cards and then place advertisements in predetermined areas of the sites for predetermined periods of time. The fee depends on the display area, display size, or display period.
·The "capture information" site is a site which displays capture information about card battles. The members can post capture information or post comments on capture information. The members can also evaluate capture information, and a ranking based on the evaluations is displayed.
·The "bulletin board" site is a site at which the members can post topics on cards, including rumors, uncertain information, or inside stories on the cards.
·The "catalog" site is a site which displays card information currently registered in the card database, in an organized manner, for example, by series, serial, or the like.
·The "card battle simulation" site is a site at which the members can select multiple cards to construct their decks or select already constructed decks and then fight card battles with the computer. The members can also construct the logic of that computer.

A card list database 21 provides interfaces so that other sites can access the information in the card database. Market price posting 22 has a price/truth or falsehood reporting function, that is, a function of registering market price information about the selling or buying prices of cards in the used-card market. The market price posting 22 also has a function of, when the market price information provided by the card database varies due to such as variations in the market, making a report to that effect. Market price data synchronization 23 is a function of, when the market price data is changed by the price report function or the like, updating the card database.

A reference market price extraction program 24 has a function of periodically and automatically crawling previously registered sites, such as auction sites or electronic commerce (EC) sites, (circulating through websites) and collecting reference market prices. An application 25 using an alternate reality (AR) previously registers location information of sightseeing areas or famous places and location information of the stores of supporting companies in the database and provides privileges, such as presentation of a card or addition of a card function, to users who visit any location in the registered location information in conjunction with the GPS function of smartphones.

A recommendation function 26 records the behavior of a member who is visiting a card specialty website or the behavior of a member which is visiting an EC site, analyzes the histories of cards viewed by the member, predicts pages (cards) which the user visiting the site currently will view subsequently, and displays the prediction. The recommendation function 26 also displays an advice on deck construction on the basis of the postings on personal collection data or card decks. A word of mouth/review function 27 allows members who have bought or possessed cards or decks to post the satisfaction level or strength of the cards or decks or their feelings when they have actually fought card battles. The word of mouth/review function 27 also narrows down the postings using a particular card or deck as a key and displays the narrowed-down postings chronologically. In addition to selling separate cards, deck/set sale 28 has a function of automatically constructing a deck from inventory information of the registered cards on the basis of deck information, which is an accumulation of such as the postings on cards or decks at the card specialty website, and selling the deck.

A posting synchronization interface 29 has a function of automatically posting information posted to the card specialty website, to an external social networking service (SNS), such as Google+™ or FaceBook™. Posted commodity data synchronization 30 is a function of automatically displaying commodity information in an EC site, on an external SNS such as FaceBook™. Any change or addition to the commodity information in the EC site is also automatically displayed on the external SNS such as FaceBook™.

At a website 40 about posting media such as original characters, monsters, or the like, original card creation/sale 41 is a function of posting an original card planned by the site operator on the site or actually creating and selling the original card. This site can receive comments from members or acquire such as feelings about pseudo-battles in card battle simulations from members. A card attribute/function combination and original card creation function 42 is a function of allowing a member to create an original card planned by the member. By using this function, it is possible to define an original attribute different from the existing attributes or define a function such as a technique or effect. An original card posting/planning 43 is a function of posting or planning an original card.

The present invention is not limited to the embodiment described above, and various modifications can be made thereto by those having common knowledge in the art without departing from the technical concept of the present invention. Of course, the target cards are not limited to trading cards, and the present invention is applicable to various types of cards.

### [Description of Reference Signs]

1: main office
2: data center
3a to 3c: card shop
4: notebook PC
5: flatbed scanner
6: sheet-feed scanner
10: card owner wishing to sell a card
11: selling store
12: clerk
21: card list database
22: market price posting
23: market price data synchronization
24: reference market price extraction program
25: application
26: recommendation function
27: review function
28: set sale
29: posting synchronization interface
30: posted commodity data synchronization
41: sale
42: card creation function
43: original card posting/planning

## Claims

1. An automatic card appraisal system comprising:
a main office serving as a management department of a card assessment system;
a data center serving as a database department of the card assessment system; and
a plurality of card shops serving as client departments of the card assessment system and configured to identify and assess a card, to view card information, and to display an informative matter from the main office,
wherein the main office, the data center, and the card shops are connected together through a network such as the Internet so as to be capable of communicating with one another, and
wherein the main office and the card shops are each provided with a sheet-feed scanner for scanning a card.
